# DEMANDE DE BREVET EUROPEEN

(11) **EP 1 006 474 A2**
(43) Date de publication de la demande: **07.06.2000**
(21) Numéro de dépôt: 99204578.1
(22) Date de dépôt: 18.07.1995
(51) Int. Cl.: G06K 7/00

(54) **Dispositif récepteur pour une carte à mémoire électronique**

(30) Priorité: 18.07.1994 FR 9408843
(62) Demande divisionnaire de: 95943538.9
(71) Demandeur: ITT COMPOSANTS ET INSTRUMENTS, F-92220 Bagneux (FR)
(72) Inventeur: Bricaud, Hervé, 39100 Dole (FR)
(74) Mandataire: Kohn, Philippe

(57) **Abrégé**

L'invention propose un dispositif (14) pour une carte (C) comportant sur une de ses faces principales (20) des plages (18) de contact, du type comportant un boîtier (22) qui délimite un accès à un tiroir (46) de réception de la carte (C) et qui peut coulisser entre une position de repos et une position d'exploitation, et du type comportant des moyens de verrouillage du tiroir en position d'exploitation du type à enclenchement automatique lorsque le tiroir (46) atteint sa position d'exploitation et du type dont la libération est provoquée par déplacement du tiroir (46) selon une course de déverrouillage, caractérisé en ce qu'il est prévu une surcourse (S) de déverrouillage du tiroir (46) qui est toujours inférieure à la portion disponible de longueur des plages (18) de contact électrique de la carte de manière à garantir qu'il ne se produit pas d'interruption du raccordement électrique au cours de la surcourse de déverrouillage.

## Description

La présente invention concerne un dispositif récepteur pour une carte à mémoire électronique.

Un tel dispositif récepteur doit permettre la mise en place de la carte dans une position d'exploitation dans laquelle est assuré le raccordement électrique.

Un tel dispositif doit également permettre à l'utilisateur d'extraire aisément la carte, après son utilisation.

Selon une première conception connue qui est par exemple utilisée dans les appareils permettant d'effectuer des transactions bancaires, c'est l'appareil lui-même qui, à la fin des opérations de transaction, assure par des moyens motorisés l'éjection de la carte dans une position telle qu'elle permet la préhension de la carte par l'utilisateur.

Selon une autre conception particulièrement simple, la carte, en position d'exploitation, dépasse de manière importante du dispositif récepteur, de plusieurs dizaines de millimètres, afin de permettre simplement à l'utilisateur de prendre la carte par la portion de cette dernière qui dépasse et de l'extraire du dispositif récepteur en exerçant une traction sur la carte selon une direction parallèle au plan de la carte.

Cette conception a toutefois pour inconvénient de laisser dépasser une partie importante de la carte lorsque cette dernière est en phase d'exploitation. Pour de nombreuses applications, et par exemple pour des raisons de sécurité lorsque la carte est utilisée dans un appareil agencé dans l'habitacle d'un véhicule automobile, il est souhaitable que la carte ne fasse saillie que très faiblement à l'extérieur du dispositif récepteur lorsqu'elle est en position de raccordement et d'exploitation.

Un tel agencement selon lequel la carte ne fait saillie que de quelques millimètres à l'extérieur du dispositif récepteur rend la préhension manuelle de la carte par l'utilisateur particulièrement difficile, voire impossible.

Il a déjà été proposé dans le document EP-A-0.350.509 un dispositif récepteur dans lequel, en position d'exploitation, la carte est entièrement introduite dans le dispositif, la fenêtre d'introduction de la carte étant fermée par un volet articulé qui, lorsque l'utilisateur désire procéder à nouveau à l'extraction de la carte, est basculé par l'utilisateur et provoque une sortie de la carte hors du dispositif récepteur.

Cette conception est complexe et elle a également pour inconvénient de nécessiter de la part de l'utilisateur de manipuler le couvercle dont les moyens de préhension sont peu accessibles et peu faciles à utiliser, notamment lorsque la manipulation, en vue de l'extraction est effectuée "en aveugle".

Dans le cadre d'une application à un étui portatif, il a déjà été proposé dans le document FR-A-2.681.711 un dispositif récepteur pour une carte à mémoire du type comportant un boîtier dont une face délimite une fenêtre donnant accès à un tiroir qui comporte un compartiment de réception de la carte et qui peut coulisser dans le boîtier entre une position de repos dans laquelle la carte peut être mise en place dans le compartiment ou extraite de ce dernier, et une position d'exploitation dans laquelle les plages de contact de la carte coopèrent avec des éléments de contact électrique d'un connecteur électrique agencé dans le boîtier, et du type comportant des moyens de butée agencés entre le boîtier et le tiroir pour délimiter la position de repos de ce dernier et des moyens de verrouillage du tiroir en position d'exploitation.

Dans la conception exposée dans ce document, l'extraction de la carte nécessite d'appréhender manuellement le tiroir par ses faces latérales afin de libérer les moyens de verrouillage et afin de provoquer son retour vers sa position de repos dans laquelle il est possible d'accéder à la carte dans son compartiment.

Cette dernière conception ne permet donc pas non plus d'extraire de manière simple la carte hors du dispositif récepteur, et notamment "en aveugle".

On a proposé dans le document EP-A-0.336.330 un dispositif récepteur pour une carte à mémoire électronique comportant sur une de ses faces principales des plages de contact électrique reliées à un circuit intégré contenant la mémoire de la carte, du type comportant un boîtier donnant accès à un tiroir de réception de la carte et qui peut coulisser dans le boîtier entre une position de repos dans laquelle la carte peut être mise en place dans le tiroir, et une position d'exploitation dans laquelle les plages de contact électrique de la carte coopèrent avec les éléments de contact électrique du connecteur électrique agencé dans le boîtier, et du type comportant des moyens de butée agencés entre le boîtier et le tiroir pour délimiter la position de repos de ce dernier et des moyens de verrouillage du tiroir en position d'exploitation, du type dans lequel le tiroir est rappelé élastiquement vers sa position de repos, les moyens de verrouillage du tiroir en position d'exploitation, à l'encontre de l'effort élastique de rappel du tiroir, étant du type à enclenchement automatique lorsque le tiroir atteint sa position d'exploitation et du type dont la libération est provoquée par déplacement du tiroir selon une course de déverrouillage, à l'encontre de l'effort de rappel élastique, au-delà de sa position d'exploitation

La présente invention a pour but de proposer un perfectionnement à un tel dispositif qui permet notamment d'en améliorer le fonctionnement, et notamment la fiabilité de fonctionnement.

Dans ce but, l'invention propose un dispositif, caractérisé en ce qu'il est prévu une surcourse de déverrouillage du tiroir qui est toujours inférieure à la portion disponible de longueur des plages de contact électrique de la carte de manière à garantir qu'il ne se produit pas d'interruption du raccordement électrique au cours de la surcourse de déverrouillage.

Selon d'autres caractéristiques du dispositif :
- en position d'exploitation du tiroir, la carte fait saillie à l'extérieur du boîtier pour permettre l'actionnement du tiroir en vue de la libération des moyens de verrouillage ;
- le tiroir comporte un compartiment de réception de la carte qui comporte une butée de positionnement de la carte qui coopère avec un bord transversal de la carte qui s'étend selon une direction perpendiculaire à la direction de coulissement du tiroir ;
- les moyens de verrouillage comportent un crochet de verrouillage porté par le boîtier et dont un bec d'extrémité, lorsque le tiroir est au voisinage de sa position d'exploitation, coopère avec une came de verrouillage formée en vis-à-vis dans le tiroir ;
- au niveau de la came de verrouillage, le bec de verrouillage peut se déplacer, sur une surcourse de verrouillage ;
- le bec d'extrémité du crochet de verrouillage s'étend selon une direction perpendiculaire à la direction de coulissement de la carte et du tiroir, et la came de verrouillage est formée dans une portion de surface du tiroir parallèle à la direction de coulissement ;
- la came de verrouillage comporte un tronçon d'introduction du bec de verrouillage, un tronçon de retenue du bec de verrouillage qui détermine la position d'exploitation du tiroir, et un tronçon d'échappement du bec de verrouillage ;
- la came de verrouillage présente un profil sensiblement en forme de coeur ;
- le crochet de verrouillage est un élément allongé qui s'étend sensiblement selon la direction de coulissement du tiroir, dont une extrémité libre est repliée à 90° pour constituer le bec de verrouillage et qui est susceptible de pivoter autour d'un axe perpendiculaire à la direction de coulissement pour permettre l'engagement et l'échappement du bec de verrouillage dans et hors de la came de verrouillage ;
- le crochet de verrouillage est un élément en fil métallique plié ;
- le bec de verrouillage est sollicité élastiquement en direction de la came de verrouillage ;
- le boîtier comporte une seconde face principale parallèle à la première qui est réalisée sous la forme d'un couvercle rapporté sur le boîtier ;
- les moyens de rappel élastique du tiroir vers sa position de repos sont constitués par deux ressorts de compression agencés latéralement de part et d'autre du tiroir entre les surfaces d'appui formées sur le tiroir et sur le boîtier.

D'autres caractéristiques et avantages de l'invention apparaîtront à la lecture de la description détaillée qui va suivre pour la compréhension de laquelle on se reportera aux dessins annexés dans lesquels :
- la figure 1 est une vue, en section selon la ligne 1-1 de la figure 2, d'un premier exemple de réalisation d'un dispositif récepteur conforme aux enseignements de l'invention intégré dans un appareil d'exploitation d'une carte à mémoire électronique ;
- la figure 2 est une vue en section partielle selon la ligne 2-2 de la figure 1 ;
- la figure 3 est une vue latérale de gauche du dispositif récepteur illustré à la figure 2 ;
- la figure 4 est une vue en section selon la ligne 4-4 de la figure 2 ;
- la figure 5 est une vue de détail à plus grande échelle de la figure 1 ;
- la figure 6 est une vue de détail à plus grande échelle de la figure 1 ;
- la figure 7 est une vue de détail à plus grande échelle de la figure 2 ; et
- la figure 8 est une vue similaire à celle de la figure 2 qui représente, à plus grande échelle, une variante de réalisation du dispositif récepteur conforme aux enseignements de l'invention, avec arrachement partiel de la première face principale du boîtier.

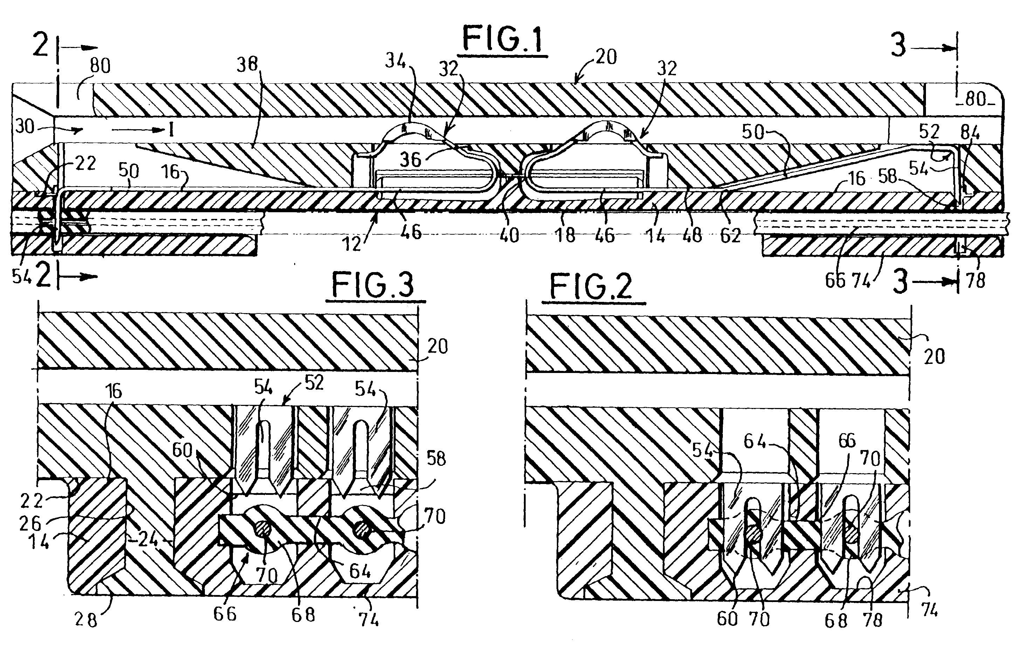

On a représenté aux figures 1 et 2 une partie du corps d'un appareil 10 faisant appel à l'exploitation de données contenues dans une carte à mémoire électronique C et qui comporte à cet effet une fente 12 permettant l'introduction de la carte dans un dispositif récepteur 14 qui est agencé sur un fond 16 de l'appareil 10.

La carte à mémoire électronique C, qui est illustrée aux figures 1 et 2 dans sa position de mise en place dans le dispositif récepteur, comporte des plages de contact électrique 18 qui sont agencées sur l'une 20 des grandes faces principales rectangulaires de la carte.

Le dispositif récepteur 14 réalisé conformément aux enseignements de l'invention est essentiellement constitué par un boîtier 22 comportant une première face principale plane et rectangulaire 24, c'est à dire la face supérieure en considérant la figure 1, qui est une pièce moulée en matière plastique.

L'autre face plane inférieure 26 du boîtier 22 est constituée par un couvercle métallique en tôle qui, comme on peut le voir sur la figure 8, est fixé sur la face supérieure 24 en forme de plaque par quatre pattes rabattues 28.

On a représenté sur les figures 2 et 8, l'axe longitudinal médian X-X du dispositif 14 qui s'étend selon la direction longitudinale principale de la carte, c'est-à-dire parallèlement à une direction I d'introduction et d'extraction de la carte.

Le boîtier 22 peut par exemple être fixé sur la face inférieure 30 d'une plaque 32 à circuit imprimé appartenant à l'appareil 10.

La fixation du boîtier 22 est assurée par des vis 34, ou par des organes équivalents, et par des plots 36 réalisés venus de matière avec la plaque supérieure 24 du boîtier 22 qui sont reçus dans des trous correspondant de la plaque à circuit imprimé 32 et dont les têtes sont ensuite serties à chaud.

La plaque ou face supérieure 24 du boîtier 22 reçoit un connecteur électrique 34 dont des lames recourbées 36 de contact électrique font saillie, au-delà de la face inférieure 38 de la plaque supérieure 24 du boîtier 22, à l'intérieur de la chambre parallélépipédique rectangle 40 délimitée à l'intérieur du boîtier entre les faces supérieure 24 et inférieure 26 et par une paroi de fond ou d'extrémité 42 agencée à droite en considérant les figures 1 et 2.

Le connecteur électrique 34 est de conception connue et réalisé sous la forme d'une embase portant les éléments de contact 36 qui est montée dans un logement complémentaire 35 formé dans la plaque supérieure 24 du boîtier 22.

Pour connaître de manière détaillée la conception d'un exemple de réalisation du connecteur 34, on pourra par exemple se reporter au document WO-A-95/18421.

La chambre 40 du boîtier 22 est ouverte à son autre extrémité 44 pour constituer une fenêtre d'accès à un tiroir coulissant 46 qui délimite un logement 48 destiné à recevoir la carte C.

Le tiroir 46 est une pièce moulée en matière plastique en forme générale de cadre qui est montée coulissante dans la chambre 40 du boîtier 22 dans les deux sens selon la direction I.

Le tiroir 46 comporte un fond plan 50 qui prend appui contre la face inférieure 26 du boîtier 22, le logement 48 récepteur de la carte C étant ouvert en direction de la face inférieure 38 de la plaque supérieure 24 du boîtier 22.

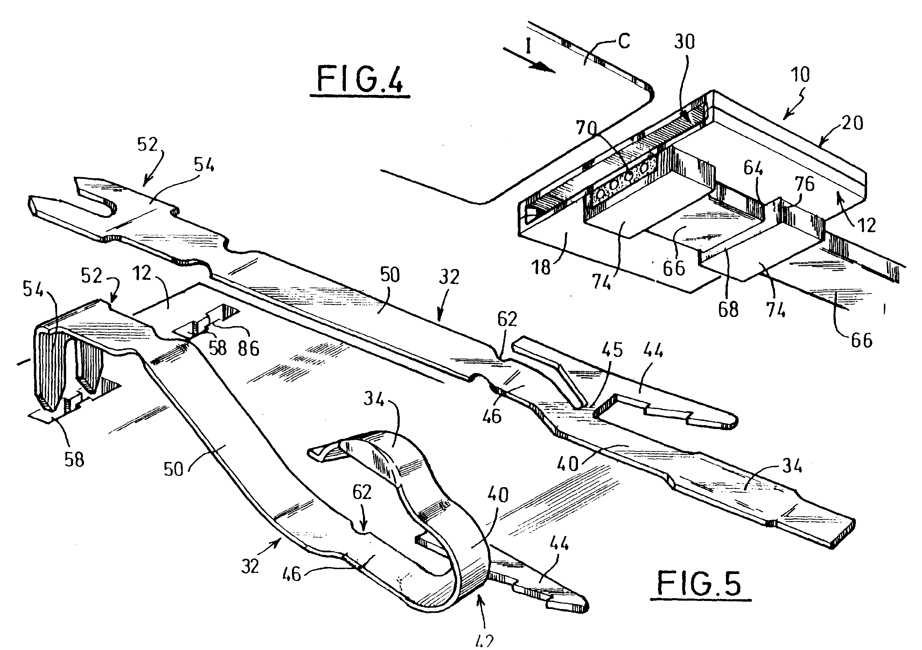

La profondeur du logement récepteur 48 est, comme on peut le voir sur la figure 5, supérieure à l'épaisseur de la carte C et le logement est délimité par une face transversale 52 qui constitue une surface de butée transversale pour le bord transversal en vis-à-vis 54 de la carte C.

Le tiroir 46 est illustré aux figures 1 et 2 dans sa position de repos dans laquelle il est en butée contre des ergots de butée 56 du boîtier 22.

Le tiroir 46 est rappelé en permanence élastiquement vers cette position de repos par deux ressorts hélicoïdaux de compression 58 qui sont agencés latéralement de part et d'autre des bras latéraux 60 du tiroir 46, qui définissent des logements de guidage des ressorts 58.

Les extrémités opposées des ressorts 58 prennent appui contre des surfaces d'appui 62 du tiroir 46 et 64 du boîtier 22 respectivement.

Dans la position de repos illustrée aux figures 1 et 2, la carte C fait saillie de manière importante hors du tiroir 46 du boîtier 22 par la fenêtre 44 et donc hors de l'appareil 10 selon une distance D1 qui sépare le bord transversal arrière 66 de la carte de la face frontale avant 11 du boîtier 10 et qui est par exemple de l'ordre de 23 mm.

La mise en place de la carte C s'effectue donc de manière très simple par introduction de la carte dans la fente 12 puis dans le logement récepteur 48 du tiroir 46 jusqu'à ce que le bord transversal avant 54 de la carte C vienne en butée contre la surface transversale de butée 52.

Sous l'effet de l'effort d'introduction de la carte C dans le dispositif récepteur 14, le tiroir 46 est susceptible de se déplacer, depuis sa position de repos illustrée aux figures 1 et 2, par coulissement à l'intérieur de la chambre 40, vers une position d'exploitation illustrée en silhouette sur la figure 8 dans laquelle le bord transversal arrière 66' ne dépasse plus au-delà de la face frontale 11 que d'une distance réduite D2 qui est par exemple égale à environ 3 mm, la course D3 du chariot étant d'environ 20 mm.

On a désigné par la référence générale 70, des moyens de verrouillage du tiroir 46 dans sa position d'exploitation 46' illustrée en silhouette sur la figure 8.

Les moyens de verrouillage 70 comportent, comme on peut le voir aux figures 1 et 5, un crochet de verrouillage 72 qui est un élément en fil métallique plié dont le corps principal 74 s'étend longitudinalement parallèlement à la direction I d'introduction de la carte et de coulissement du chariot 46.

L'extrémité libre 76 du crochet de verrouillage 72 est repliée à 90° en direction du chariot 46.

Dans la position de repos illustrée sur les figures, un prolongement latéral 78 du chariot 46 comporte une rainure longitudinale 80 parallèle à la direction I qui permet le coulissement de l'extrémité repliée 76 formant bec de verrouillage sans interférence avec le chariot 46 et son prolongement 78.

L'autre extrémité 82 du corps principal 74 du crochet de verrouillage 72 est reçue dans un logement 84 formé dans une portion 86 de la plaque supérieure 24 du boîtier 22 qui fait saillie au-delà de la face supérieure 39 de la plaque supérieure 24 pour être reçu dans une ouverture 88 de la plaque à circuit imprimé 32.

L'extrémité 82 est maintenue dans le logement 84 par un ressort hélicoïdal de compression 86 et elle est guidée dans un passage formé dans un téton de guidage du ressort 86.

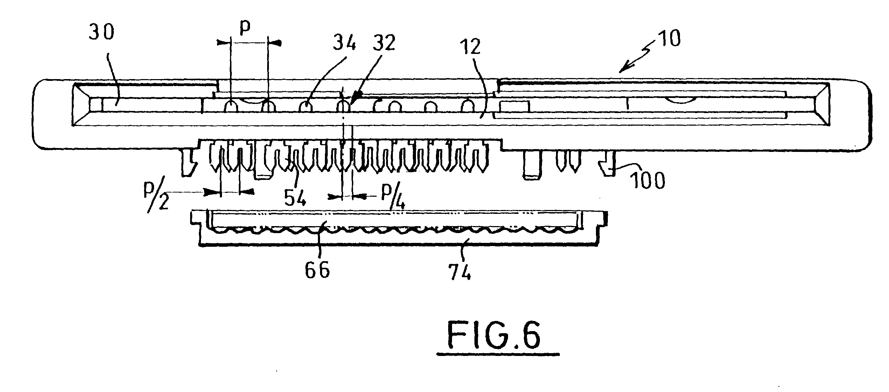

Comme cela est schématisé en silhouette sur la figure 6, le crochet de verrouillage 72, et donc le bec 46, peut ainsi pivoter autour d'un axe Y-Y perpendiculaire à la direction I et le crochet 72 ainsi que le bec de verrouillage 76 sont en permanence sollicités élastiquement dans la position active illustrée sur la figure 6, et ceci en direction de la plaque inférieure 26 du boîtier 22, c'est-à-dire en direction du fond de la rainure 80 du prolongement 78 du tiroir 46.

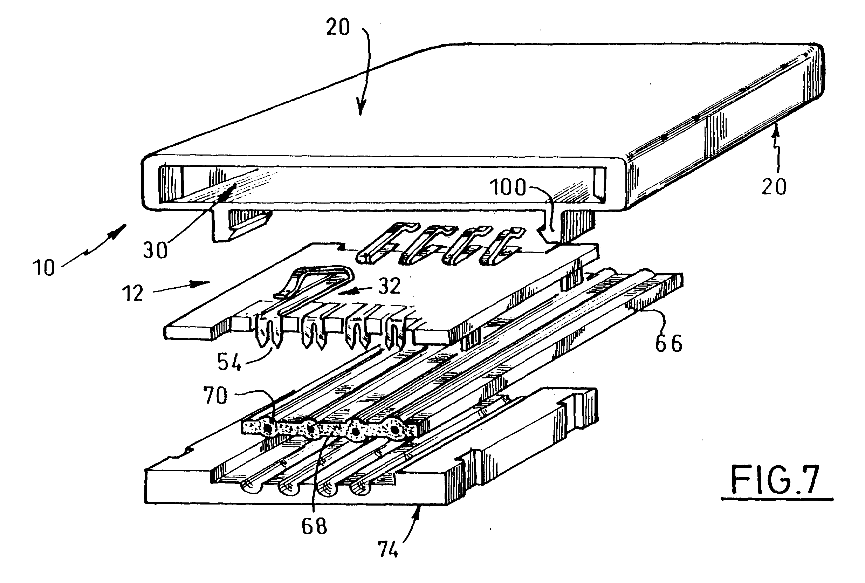

Comme cela est illustré aux figures 1 et 7, la rainure 80, qui est ouverte à son extrémité de droite en considérant la figure 1, se termine à son extrémité de gauche par une came de verrouillage 90 formée dans la face supérieure 92 du prolongement latéral 78 du tiroir 46 et qui est ouverte dans cette face supérieure 92.

Comme on peut le voir sur la figure 7, la came de verrouillage 90 présente un profil sensiblement en forme de coeur.

Ce profil comporte un tronçon 94 d'introduction du bec de verrouillage 76 avec une première rampe 96, puis un tronçon 98 de retenue du bec de verrouillage 76 qui est séparé du tronçon d'introduction 94 par une rampe 100.

Le profil de la came de verrouillage comporte enfin un tronçon 102 d'échappement du bec de verrouillage 76 qui est séparé du tronçon de retenue 98 par une rampe 104 et qui comporte lui-même une rampe d'échappement 106.

Vers la gauche en considérant les figures 1 et 7, le tronçon d'introduction 94 et le tronçon d'échappement 102 comportent chacun un fond de butée 108, 110 respectivement pour le bec de verrouillage 76.

On a représenté sur la figure 7 diverses positions P1 à P5 que le bec de verrouillage 76 est susceptible d'occuper à l'intérieur de la came de verrouillage 90.

Lors de la course de déplacement du tiroir 46 à l'intérieur du boîtier 40, de la gauche vers la droite en considérant la figure 1, le bec de verrouillage 76, après avoir parcouru la rainure 80, atteint la position P1 à l'entrée du tronçon d'introduction 94.

Il franchit ensuite la rampe 96 jusqu'à atteindre le fond 108, c'est-à-dire la position P2.

Ces déplacements du tiroir 46 s'effectuent à l'encontre de l'effort de rappel exercé par les ressorts 58.

L'utilisateur qui a ressenti la venue en butée du bec de verrouillage 76 contre le fond 108 relâche alors son action de poussée sur le bord transversal arrière 66 de la carte.

Sous l'effet des ressorts de rappel 58, le tiroir 46 est rappelé élastiquement de la droite vers la gauche.

Le bec de verrouillage 76 se déplace alors de la position P2 vers la position P3 dans laquelle il tombe dans le tronçon en forme d'encoche de retenue 98.

Dans cette position, appelée "position d'exploitation", le tiroir est verrouillé dans sa position d'exploitation 46' représentée sur la figure 8 en silhouette.

Lors de la première phase de déplacement du tiroir 46 à l'encontre des ressorts 58, le bord transversal avant 54 de la carte C est venu coopérer avec un levier 112 qui commande un commutateur 114 de détection de la présence de la carte 54 en position d'exploitation.

Le commutateur de fin de course 114 est d'une conception connue.

Il peut être réalisé sous la forme d'un composant indépendant du connecteur 34, comme cela est illustré sur la figure 1, ou associé et intégré à ce dernier comme cela est illustré sur la figure 8.

Le commutateur 114 sur lequel agit le levier 112 peut être du type normalement ouvert ou normalement fermé et réalisé par exemple selon la conception décrite et représentée dans la demande de brevet français n° 94 06684.

Comme le connecteur 34, le commutateur 114 est disposé dans un logement 116 de la plaque à circuit imprimé 32 et ses bornes de raccordement 118, comme les bornes 33 du connecteur 34, sont en contact avec des pistes conductrices correspondantes formées sur la face inférieure 30 de la plaque à circuit imprimé 32.

Grâce à une telle conception, les bornes de raccordement 33 et 118 s'étendent entre des portions en vis-à-vis de la plaque supérieure 24 du boîtier 22 et de la carte à circuit imprimé 32 et leur raccordement avec les plages conductrices formées sur la face inférieure en vis-à-vis 30 de la plaque à circuit imprimé 32 est assuré automatiquement par la mise en place et la fixation du composant unitaire constitué par le boîtier 22 avec son connecteur 34 et/ou son commutateur 114.

Le positionnement du commutateur dans le boîtier 122 et de la came de verrouillage 90 dans le tiroir 46 sont tels qu'il évitent toute impulsion électrique ou parasite lors de la phase d'extraction de la carte.

En effet, le déverrouillage du chariot 46 s'effectue en appliquant une poussée, de la gauche vers la droite en considérant la figure 8, sur le bord transversal arrière 66' de la carte C' à l'encontre de l'effort de rappel appliqué par les ressorts 58.

Au niveau de la came de verrouillage 90, le bec de verrouillage 76 se déplace alors, sur une surcourse S d'environ 0,5 mm, de la position P3 vers la position P4, déplacement au cours duquel il franchit la rampe 104.

Ce déplacement peut éventuellement se prolonger jusqu'à ce que le bec de verrouillage 76 vienne en butée contre le fond 110.

La valeur faible de la surcourse S de déverrouillage est toujours inférieure à la portion disponible de longueur des plages de contact de manière à garantir qu'il ne se produit pas d'interruption du raccordement électrique au cours de la surcourse de déverrouillage.

L'utilisateur relâche alors l'effort de poussée qu'il venait d'appliquer au bord transversal arrière 66' de la carte et le bec de verrouillage 76 se dégage de la came de verrouillage 70 en passant de la position P4 vers la position P5 en franchissant la rampe 106, le tiroir 46 étant rappelé librement et élastiquement par les ressorts de compression 58 jusqu'à sa position de repos illustrée aux figures 1 et 2 dans laquelle il est en butée contre les plots 56.

Afin d'éviter une éjection intempestive de la carte hors du dispositif 14 et de l'appareil 10 lors de la venue en butée du tiroir contre les plots 56, il est possible d'intégrer des moyens de freinage (non représentés) dans le logement 48 qui reçoit la carte C dans le tiroir 46.

On notera que la sollicitation élastique permanente du bec de verrouillage 76 en direction du fond 26, par le ressort 86 évite tout échappement accidentel du bec de verrouillage 76 et donc, tout relâchement accidentel du tiroir 46, et ceci quelle que soit l'orientation dans l'espace du boîtier 22 du dispositif 14, ainsi que dans les cas où l'appareil 10 est monté à bord d'un véhicule automobile en étant ainsi soumis à des vibrations et des trépidations.

On comprend aisément que l'utilisateur peut effectuer les opérations d'introduction et d'extraction de la carte C de manière très simple et pratiquement en aveugle.

L'introduction se fait, pour l'utilisateur, de manière classique en introduisant la carte puis en poussant le tiroir 46 à l'encontre des ressorts 58 jusqu'à aboutir au verrouillage final par le bec 76.

L'extraction de la carte peut être effectuée en aveugle, l'utilisateur ayant simplement à trouver, par le toucher, le bord transversal arrière 66' de la carte qui fait très faiblement saillie dans l'habitacle du véhicule puis à exercer une légère poussée sur la carte, le relâchement de l'effort de poussée provoquant automatiquement la sortie de la carte vers sa position illustrée sur la figure 1 dans laquelle l'utilisateur peut la récupérer aisément du fait de la partie importante de la carte qui fait saillie sur une distance D1 à l'extérieur de l'appareil 10.

La mise en place et l'introduction ainsi que l'extraction de la carte s'effectuent donc, du point de vue de l'utilisateur, selon un simple mouvement de poussée de la carte et donc sans aucune préhension importante de la carte nécessaire à une quelconque extraction.

La conception du dispositif selon l'invention est particulièrement avantageuse en ce qu'elle permet de le réaliser sous la forme d'un composant unitaire monobloc dans lequel sont associées, sous la forme d'éléments modulaires rapportés, notamment les fonctions de raccordement électrique et de détection de la présence d'une carte, cet ensemble pouvant être implanté très aisément dans un appareil par exemple en le fixant sur une carte à circuit imprimé comme tout autre composant.

## Revendications

1. Dispositif récepteur (14) pour une carte à mémoire électronique (C) comportant sur une de ses faces principales (20) des plages (18) de contact électrique reliées à un circuit intégré contenant la mémoire de la carte, du type comportant un boîtier (22) donnant accès à un tiroir (46) de réception de la carte (C) et qui peut coulisser dans le boîtier (22) entre une position de repos dans laquelle la carte (C) peut être mise en place dans le tiroir ou extraite de ce dernier, et une position d'exploitation dans laquelle les plages de contact électrique (18) de la carte (C) coopèrent avec les éléments de contact électrique d'un connecteur électrique (34) agencé dans le boîtier (22), et du type comportant des moyens de butée (56) agencés entre le boîtier (22) et le tiroir (46) pour délimiter la position de repos de ce dernier et des moyens de verrouillage du tiroir en position d'exploitation, du type dans lequel le tiroir (46) est rappelé élastiquement (58) vers sa position de repos, les moyens de verrouillage du tiroir (46) en position d'exploitation, à l'encontre de l'effort élastique de rappel du tiroir (46), étant (70, 72, 76, 90) du type à enclenchement automatique lorsque le tiroir (46) atteint sa position d'exploitation et du type dont la libération est provoquée par déplacement du tiroir (46) selon une course de déverrouillage, à l'encontre de l'effort de rappel élastique (58), au-delà de sa position d'exploitation, caractérisé en ce qu'il est prévu une surcourse (S) de déverrouillage du tiroir (46) qui est toujours inférieure à la portion disponible de longueur des plages (18) de contact électrique de la carte de manière à garantir qu'il ne se produit pas d'interruption du raccordement électrique au cours de la surcourse de déverrouillage.

2. Dispositif selon la revendication 1, caractérisé en ce que, en position d'exploitation du tiroir (46), la carte (C') fait saillie à l'extérieur du boîtier (22) pour permettre l'actionnement du tiroir (46) en vue de la libération des moyens de verrouillage (70, 72, 76, 90).

3. Dispositif selon l'une des revendications 1 ou 2, caractérisé en ce que le tiroir comporte un compartiment (48) de réception de la carte qui comporte une butée (52) de positionnement de la carte (C) qui coopère avec un bord transversal (54) de la carte (C) qui s'étend selon une direction perpendiculaire à la direction (I) de coulissement du tiroir (46).

4. Dispositif selon l'une quelconque des revendications 1 à 3, caractérisé en ce que les moyens de verrouillage comportent un crochet de verrouillage (72, 76) porté par le boîtier (22) et dont un bec d'extrémité (76), lorsque le tiroir (46) est au voisinage de sa position d'exploitation, coopère avec une came de verrouillage (90) formée en vis-à-vis dans le tiroir (46, 78, 92).

5. Dispositif selon la revendication précédente, caractérisé en ce que, au niveau de la came de verrouillage (90), le bec de verrouillage (76) peut se déplacer, sur une surcourse de verrouillage (S).

6. Dispositif selon l'une des revendications 4 ou 5, caractérisé en ce que le bec d'extrémité (76) du crochet de verrouillage (72) s'étend selon une direction perpendiculaire à la direction de coulissement de la carte (C) et du tiroir (46), et en ce que la came de verrouillage (90) est formée dans une portion de surface (92) du tiroir parallèle à la direction de coulissement.

7. Dispositif selon l'une quelconque des revendications 4 à 6, caractérisé en ce que la came de verrouillage (90) comporte un tronçon (94) d'introduction du bec de verrouillage (76), un tronçon (98) de retenue du bec de verrouillage qui détermine la position d'exploitation du tiroir (46), et un tronçon (102) d'échappement du bec de verrouillage (76).

8. Dispositif selon la revendication 7, caractérisé en ce que la came de verrouillage (90) présente un profil sensiblement en forme de coeur.

9. Dispositif selon la revendication 4, caractérisé en ce que le crochet de verrouillage est un élément allongé (74) qui s'étend sensiblement selon la direction (I) de coulissement du tiroir (46), dont une extrémité libre (46) est repliée à 90° pour constituer le bec de verrouillage (76) et qui est susceptible de pivoter autour d'un axe (Y-Y) perpendiculaire à la direction de coulissement (I) pour permettre l'engagement et l'échappement du bec de verrouillage (76) dans et hors de la came de verrouillage (90).

10. Dispositif selon la revendication 9, caractérisé en ce que le crochet de verrouillage (72) est un élément en fil métallique plié.

11. Dispositif selon l'une quelconque des revendications 4 à 10, caractérisé en ce que le bec de verrouillage (76) est sollicité élastiquement en direction de la came de verrouillage (90).

12. Dispositif selon l'une quelconque des revendications précédentes, caractérisé en ce que le boîtier (22) comporte une seconde face principale parallèle à la première (24) qui est réalisée sous la forme d'un couvercle (26) rapporté sur le boîtier.

13. Dispositif selon l'une quelconque des revendications précédentes, caractérisé en ce que les moyens de rappel élastique du tiroir (46) vers sa position de repos sont constitués par deux ressorts de compression (58) agencés latéralement de part et d'autre du tiroir (46) entre les surfaces d'appui formées sur le tiroir (62) et sur le boîtier (64).
